# EUROPEAN PATENT SPECIFICATION

(11) **EP 3 639 785 B1**
(45) Date of publication and mention of the grant of the patent: **15.09.2021**
(21) Application number: 19204087.1
(22) Date of filing: 18.10.2019
(51) Int. Cl.: A61C 7/00, A61C 7/08

(54) **APPLIANCE FOR ASSISTING VOCAL CORD CLOSURE TO TRAIN VOCALIZATION**
GERÄT ZUR UNTERSTÜTZUNG DER VOKALISIERUNG
APPAREIL ASSISTANT LA FERMETURE DES CORDES VOCALE POUR ENTRAÎNER LA VOCALISATION

(30) Priority: 19.10.2018 CN 201811224559; 19.10.2018 CN 201821701101 U
(43) Date of publication of application: 22.04.2020
(73) Proprietor: Liu, Yaxian, Rizhao City, Shandong 276825 (CN)
(72) Inventor: Wang, Jack, Shanghai, 200032 (CN)
(74) Representative: Kador & Partner PartG mbB

(56) References cited:
- EP-A1- 0 315 777
- FR-A1- 2 369 828
- US-A- 5 645 420
- US-A- 5 876 199

## Description

### Technical Field

The present invention relates to the field of vocal cord closure correction techniques, and more particularly to an appliance for assisting vocal cord closure to train vocalization.

### Background

The vocal cords are major component of the vocal organ. The vocal cords are located in the middle of the laryngeal cavity and have a bilaterally symmetrical structure. The sagittal fissure between the vocal cords on both sides is a glottis fissure. When vocalizing, the vocal cords on both sides are tightened, the glottis fissure is shrunk, or even closed. The airflow from the trachea and lungs continuously impacts the vocal cords, causing vibration and sound.

When the sound is abnormal in terms of sound quality, volume, tone or duration of pronunciation, it is necessary to correct the vocalization by means of an auxiliary device. In the existing speech vocal correction process, the vocal cord closure training is usually assisted by the correction appliance. The correction appliance includes a first fixed cavity and a second fixed cavity disposed opposite to each other, and the first fixed cavity and the second fixed cavity are respectively used for fixing the upper incisors and the lower incisors, so as to maintain a certain distance between the upper and lower teeth in order to provide a positive effect on voice correction. Further research has found that the above-mentioned correction appliance has limited correction effect on phonation disorders caused by vocal cord closure such as vocal cord paralysis, lack of vocal cord closure ability, and poor vocal cord closure. It is difficult to achieve healthy pronunciation and speech resonance.

US 5,645,420 A refers to an appliance, which accommodates multi-racial dentition characteristics.

US 5,876,199 A discloses tooth positioning appliances, and in particular a prefabricated appliance of one size which accommodates various mouth and tooth sizes and is useful as an orthodontic corrective device, an athletic mouthguard, a bruxism inhibitor, and a sleep apnea prevention device and snoring prevention device.

EP 0 315 777 A relates to appliances for correcting human dentition and more particularly to an appliance for correcting open-bite and tongue-thrust.

Therefore, there is a need for a correction appliance for assisting vocal cord closure to train vocalization, so as to address the above problems.

FR2369828 Discloses a dental treatment device for straightening teeth that is cast in silicone resin and avoids use of metal wires.

### Summary

In view of this, the object of the present invention is to provide an appliance for assisting vocal cord closure to train vocalization. When the appliance is being worn, the distance between the two sides of the oral cavity is enlarged and extended, the corners of mouth are supported and separated, and the vocal cords are passively closed, which helps to achieve healthy pronunciation and vocal resonance.

Based on the above object, the present invention provides an appliance for assisting vocal cord closure to train vocalization, the appliance comprising: an inner arc plate, an outer arc plate and two oppositely disposed partition plates, the inner arc plate and the outer arc plates are oppositely disposed, and the two partition plates are spaced apart between the inner arc plate and the outer arc plate. An accommodation cavity is enclosed by the two partition plates, the inner arc plate and the outer arc plate. In the height direction, the accommodation cavity is separated into an upper accommodation cavity for accommodating the upper incisor and a lower accommodation cavity for accommodating the lower incisor. The two ends of opposite sides of the inner arc plates extend respectively away from the accommodation cavity. The ends of opposite sides of the outer arc plate extend respectively away from the accommodation cavity, and are used to split the corners of the mouth.

Preferably, the appliance further comprises: a tongue-abutting plate, which is disposed on a side surface of the inner arc plate facing away from the outer arc plate and extends away from the outer arc plate.

Preferably, the width of the tongue-abutting plate gradually increases from distant to close toward the inner arc plate.

Preferably, the tongue-abutting plate includes a connecting end and a free end, the connecting end is disposed opposite the free end, the connecting end is disposed on the inner arc plate close to the lower accommodation cavity, and the free end extends towards a side of the upper accommodation cavity.

Preferably, an upper baffle is extended upwardly from an upper end surface of the outer arc plate, and a lower baffle is extended downwardly from a lower end surface of the outer arc plate. The upper baffle is used for blocking the inner surface of the upper lip from being in contact with the upper row of teeth. The lower baffle is used for blocking the inner surface of the lower lip from being in contact with the lower row of teeth.

Preferably, the middle portion of the upper baffle is provided with an upper groove for accommodating the upper labial frenulum, and the upper baffle is provided with a smooth transition from the opposite side groove walls of the upper groove to the upper end faces of the two sides respectively. A middle portion of the lower baffle is provided with a lower groove for accommodating the lower labial frenulum, and the lower baffle is provided with a smooth transition from the opposite side groove walls of the lower groove to the lower end faces of the two sides respectively.

Preferably, both end portions of the inner arc plate are first end portions, and the first end portions extend from the joint of the inner arc plate and the partition plate toward canines. Both end portions of the outer arc plate are second end portions, and the second end portions extend from the joint of the outer arc plate and the partition plate toward molars.

Preferably, a gap is disposed between the first end of the inner arc plate and the second end of the outer arc plate. The width of the gap is gradually increasing from close to distant away from the accommodation cavity.

Preferably, the first end portion of the inner arc plate includes a first upper side surface, a first end surface, and a first lower side surface. A smooth transition is respectively provided between the first upper side surface, the first end surface, and the first lower side surface. The second end of the outer arc plate includes a second upper side, a second end surface, and a second lower side. A smooth transition is respectively provided between the second upper side surface, the second end surface, and the second lower side surface. A middle portion of the second upper side surface, a middle portion of the second end surface, and a middle portion of the second lower side surface are each provided with a slit.

Further, preferably, the appliance is made of a rubber and plastic foamed material.

As can be seen from the above, the correction appliance for assisting vocal cord closure to train vocalization provided by the present invention has the following advantages compared with the prior art.

### Brief description of the drawings

The above features and technical advantages of the present invention will become more apparent and comprehensible by consideration of the detailed description and accompanying drawings.
Fig. 1 is a schematic view of an appliance for assisting vocal cord closure to train vocalization, in accordance with one embodiment of the present invention.
Fig. 2 is a side view of the appliance for assisting vocal cord closure to train vocalization in Fig. 1.
Fig. 3 is another side view of the appliance for assisting vocal cord closure to train vocalization in Fig. 1.
Fig. 4 is a further side view of the appliance for assisting vocal cord closure to train vocalization in Fig. 1.
Figs. 5a-5b are schematic diagrams showing the state of use of the appliance for assisting vocal cord closure to train vocalization in Fig. 1.

Reference number list:
- 1:: inner arc plate
- 2:: outer arc plate
- 3:: partition plate
- 4:: accommodation cavity
- 5:: upper accommodation cavity
- 6:: lower accommodation cavity
- 7:: tongue-against plate

- 8:: upper baffle
- 9:: lower baffle
- 10:: upper groove
- 11:: lower groove
- 12:: first end portion
- 13:: second end portion
- 14:: gap
- 15:: incisor
- 16:: canine
- 17:: molar
- 18:: tongue
- 19:: upper lip
- 20:: lower lip

### Brief Description

The present invention will be further described in detail below with reference to the specific embodiments and accompanying drawings of the invention. The same components are denoted by the same reference numerals. It is to be noted that the terms "front", "back", "left", "right", "upper" and "lower" as used in the following description refer to the directions in the drawings. The terms "inner" and "outer" are used to refer to a direction toward or away from the geometric center of a particular component, respectively.

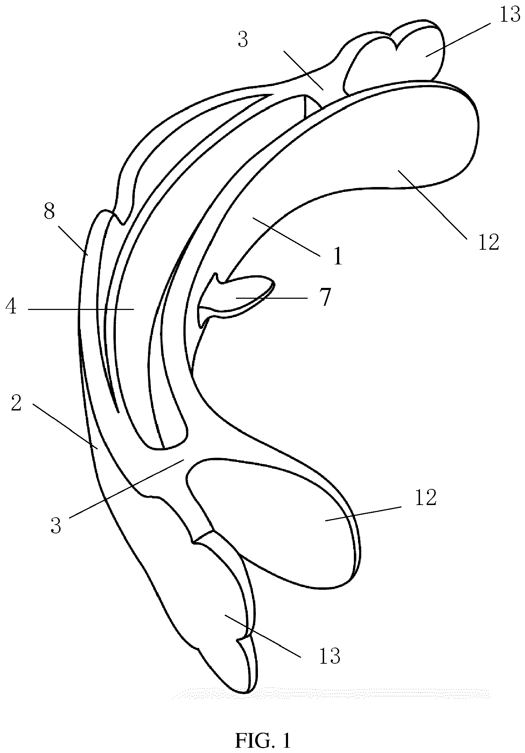

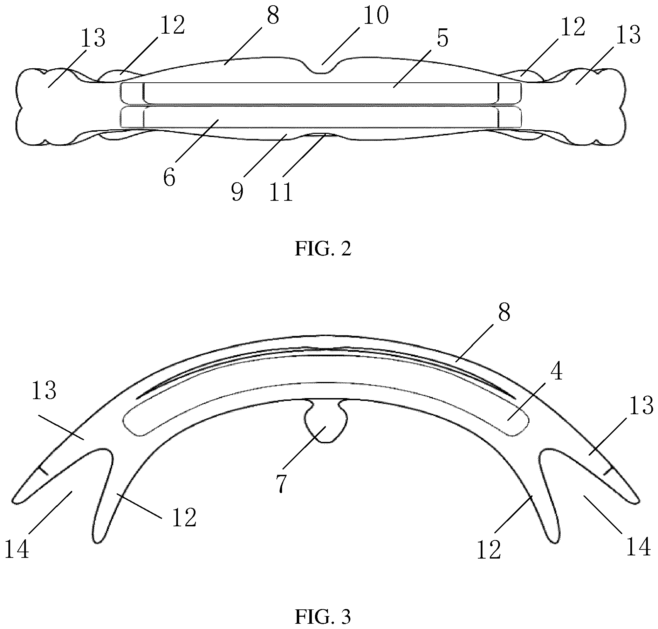

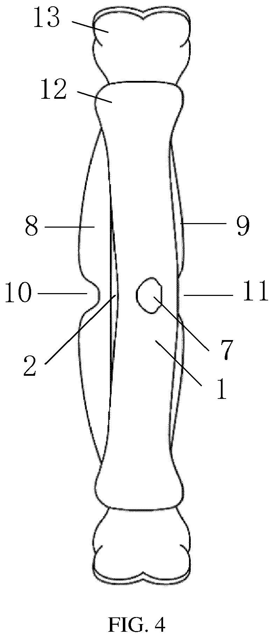

Fig. 1 is a schematic view of the appliance for assisting vocal cord closure to train vocalization, in accordance with one embodiment of the present invention. Fig. 2 is a side view of the appliance for assisting vocal cord closure to train vocalization in Fig. 1. Fig. 3 is another side view of the appliance for assisting vocal cord closure to train vocalization in Fig. 1. Fig. 4 is a further side view of the appliance for assisting vocal cord closure to train vocalization in Fig. 1. As shown in FIG. 1 to FIG. 4, the correction appliance for assisting vocal cord closure to train vocalization includes: an inner arc plate 1, an outer arc plate 2, and two oppositely disposed partition plates 3.

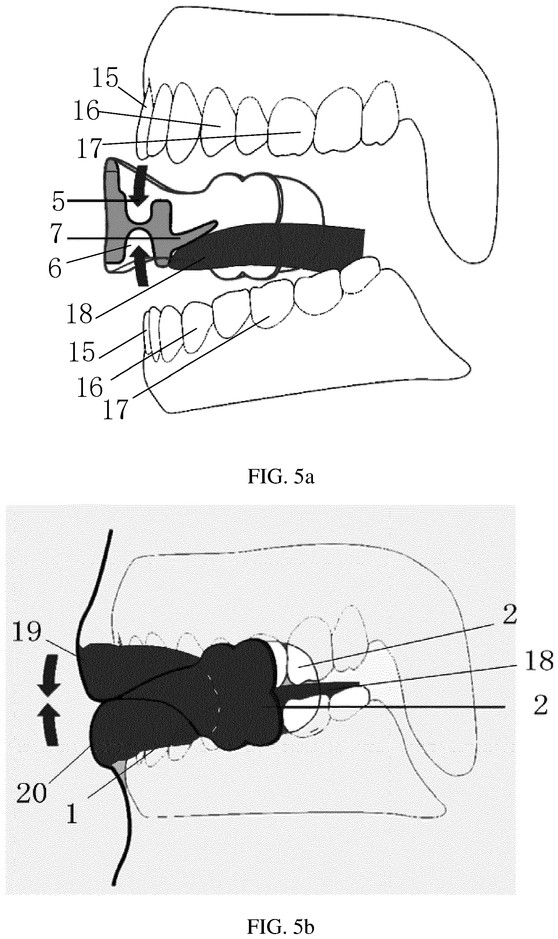

The appliance comprises: an inner arc plate 1, an outer arc plate 2 and two oppositely disposed partition plates 3. The inner arc plate 1 is opposite to the outer arc plate 2, and the two partition plates 3 are spaced apart between the inner arc plate 1 and the outer arc plate 2. An accommodation cavity 4 is enclosed by the two partitions plates 3, the inner arc plate 1 and the outer arc plate 2. In the height direction, the accommodation cavity is separated into the upper accommodation cavity 5 for accommodating the upper incisors 15 (as shown in Fig. 5a or 5b) and the lower accommodation cavity 6 for accommodating the lower incisors 16 (as shown in Fig. 5a or 5b). The two ends of opposite sides of the inner arc plates 1 extend respectively away from the accommodation cavity 4. The ends of opposite sides of the outer arc plate 2 extend respectively away from the accommodation cavity 4, and are used to split the corners of the mouth.

In use, the appliance is placed in the mouth, and the upper row of incisors 15 and the lower row of incisors 16 bite into the upper accommodation cavity 5 and the lower accommodation cavity 6, respectively. The upper accommodation cavity 5 and the lower accommodation cavity 6 respectively fix the upper row of incisors 15 and the lower row of incisors 16. The inner arc plate 1 is attached to the inner surface of the teeth, and the two ends of opposite sides of the inner arc plates 1 extend respectively away from the accommodation cavity 4 to assist the separation of the upper lip 19 and the lower lip 20. The outer arc plate 2 extends to the outside of the lip, and the ends of opposite sides of the outer arc plate 2 extend respectively away from the accommodation cavity 4, and are used to split the corners of the mouth and keep the corners of the mouth open. By adopting the above-mentioned correction appliance for assisting vocal cord closure to train vocalization, the upper accommodation cavity 5 and the lower accommodation cavity 6 respectively fix the upper row of incisors 15 and the lower row of incisors 16 to maintain a certain distance between the upper row of teeth and the lower row of teeth. At the same time, the ends of opposite sides of the inner arc plate 1 and the outer arc plate 2 extend outwardly, and the outer arc plate 2 extends from the inside of the lip to the outside of the lip, so as to split the corners of the mouth and maintain the corners of the mouth open. This increases the distance of the opposite sides of the mouth, increases the resonance and promotes the passive and healthy closure of the vocal cords, which maximum the positive work of the muscle and nerves assisting the closure of vocal cords to help achieve a healthy pronunciation and vocal resonance.

In the present embodiment, the radian of the inner arc plate 1 is designed according to the arc shape of the inner surface of the tooth arrangement, and the radian of the outer arc plate 2 is designed according to the arc shape of the outer surface of the tooth arrangement, and the inner arc plate 1 and the outer arc plate 2 are oppositely arranged, in order to simultaneously fix the upper row of teeth and the lower row of teeth. The accommodation space of the upper accommodation cavity 5 and the lower accommodation cavity 6 can be set according to the teeth condition of the specific user. Generally, the incisor can include four front teeth or additionally one or two canines, which are accommodated in the accommodation cavity 4. The opposite side ends of the inner arc plate 1 respectively extend toward the canines on both sides, generally extending to the second canine; the opposite side ends of the outer arc plate 2 respectively extend toward the molars at both sides, usually extending to the first molar.

The above-mentioned correction appliance for assisting vocal cord closure to train vocalization is suitable for singers, voice workers and actors who need to achieve and maintain high level of vocal ability, suitable for patients with vocal dysfunction and patients who need to resume normal vocalization after surgery; also suitable for vocal actors, teachers, speech therapists, patients with vocal dysfunction, patients with vocal diseases, and people with vocal dysfunction due to problems such as lack of vocal cord closure movement or incomplete vocal cord closure; in particular, people with vocal dysfunction caused by vocal cord closure such as vocal cord paralysis, lack of vocal cord closure ability, poor vocal cord closure, etc.

Preferably, the apparatus further comprises: a tongue-abutting plate 7, which is disposed on a side surface of the inner arc plate 1 facing away from the outer arc plate 2 and extends away from the outer arc plate 2. When the upper accommodation cavity 5 and the lower accommodation cavity 6 respectively fix the upper row of incisors 15 and the lower row of incisors 16, the tongue-abutting plate 7 abuts against the tongue 18, so that the tongue muscles are passively moved and relatively relaxed to avoid the tension and upwarp of the tongue 18 and the tension of the laryngeal muscle, so that the tongue is better placed. This configuration maximum the positive work of the muscle and nerves assisting the closure of vocal cords to help to achieve a healthy pronunciation and voice resonance.

Preferably, the width of the tongue-abutting plate 7 gradually increases from distant to close toward the inner arc plate 1. By providing a gradual increase in the width of the tongue-abutting plate 7, it helps to guide the tip of the tongue along the tongue-abutting plate 7 until it abuts against the inner arc plate 1, effectively guiding the tongue 18 to be placed.

Preferably, the tongue-abutting plate 7 includes a connecting end and a free end oppositely disposed, the connecting end is disposed on the inner arc plate 1 close to the lower accommodation cavity 6, and the free end extends toward the side of the upper accommodation cavity 5. The tongue-abutting plate 7 is connected to the lower position of the inner arc plate 1 through the connecting end, and the free end extends obliquely upward to effectively press the tongue 18, so as to prevent the tongue 18 from being upturned and the laryngeal muscles tension.

In this embodiment, the cross-section of the tongue-abutting plate 7 is nearly leaf-like, and the width of the tongue-abutting plate 7 gradually increases from the free end to the connecting end, and the thickness of the tongue-abutting plate 7 gradually increases from the free end to the connecting end. The angle between the tongue-abutting plate 7 and the inner arc plate 1 above it is an acute angle, and the angle between the tongue-abutting plate 7 and the inner arc plate 1 below it is an obtuse angle. The distance between the connecting end and the upper end surface of the inner arc plate 1 is greater than the distance between the connecting end and the lower end surface of the inner arc plate 1. The distance between the free end and the upper end surface of the inner arc plate 1 is less than or equal to the distance between the free end and the lower end surface of the inner arc plate 1. The edge of the tongue-abutting plate 7 has a smooth curve to avoid cutting the tongue 18.

Preferably, the upper end surface of the outer arc plate 2 extends upwardly beyond the upper baffle 8, and the lower end surface of the outer arc plate 2 extends downwardly beyond the lower baffle 9. The upper baffle 8 is used for blocking the inner surface of the upper lip 19 (as shown in Fig. 5a or 5b) from being in contact with the upper row of teeth. The lower baffle 9 is used for blocking the inner surface of the lower lip 20 (as shown in Fig. 5a or 5b) from being in contact with the lower row of teeth. When the appliance is placed in the mouth, the upper baffle 8 is located between the inner surface of the upper lip 19 and the outer surface of the upper row of teeth, and the lower baffle 9 is located between the inner surface of the lower lip 20 and the outer surface of the lower row of teeth, in order to form a barrier function and to respectively support the upper lip 19 and the lower lip 20, so that the corners of the mouth are opened.

In the present embodiment, the upper baffle 8, the plate body of the outer arc plate 2, and the lower baffle 9 are integrally formed.

Preferably, the middle portion of the upper baffle 8 is provided with an upper groove 10 for accommodating the upper labial frenulum, and the upper baffle 8 smoothly transitions from the opposite side groove walls of the upper groove 10 to the upper end faces of the both sides. The middle portion of the lower plate 9 is provided with a lower groove 11 for accommodating the lower labial frenulum, and the lower baffle 9 smoothly transitions from the opposite side groove walls of the lower groove 11 to the lower end faces of the both sides. When the appliance is placed in the mouth with the upper baffle 8 between the inner surface of the upper lip 19 and the outer surface of the upper row of teeth, the upper labial frenulum is located within the upper groove 10 and when the lower baffle 9 is located between the inner surface of the lower lip 20 and the outer surface of the lower row of teeth, the lower labial frenulum is located in the lower groove 11. The connection stability of the device in the mouth is improved. The upper baffle 8 smoothly transitions from the opposite side groove walls of the upper groove 10 to the upper end faces of the both sides, and the lower baffle 9 smoothly transitions from the opposite side groove walls of the lower groove 11 to the lower end faces of the both sides, so as to conform to human body mechanics and to improve comfort.

In the present embodiment, the edge shape of both the upper baffle 8 and the lower baffle 9 is designed according to the user's lip shape. Generally, both the upper baffle 8 and the lower baffle 9 have different structures, and the upper baffle 8 has a height slightly larger than the height of the lower baffle 9. The upper baffle 8 has a symmetrical structure along the center line of the upper groove 10, and the lower baffle 9 has a symmetrical structure along the center line of the lower groove 11. The notch width of the upper groove 10 is slightly smaller than the notch width of the lower groove 11; the groove depth of the upper groove 10 is slightly larger than the notch depth of the lower groove 11.

Preferably, both end portions of the inner arc plate 1 are first end portions 12, and the first end portion 12 extends from the joint of the inner arc plate 1 and the partition plate 3 toward the canines 16 (as shown in FIG. 5a or 5b). Both end portions of the outer arc plate 2 are second end portions 13, and the second end portion 13 extends from the joint of the outer arc plate 2 and the partition plate 3 toward the molars 17 (as shown in Fig. 5a or 5b). The first end portion 12 is used for increasing the ductility of the inner arc plate 1 within the mouth, and the second end portion 13 is used for increasing the ductility of the outer arc plate 2 outside the mouth, so as to effectively support the opening of the corners of the mouth, increase the distance between opposite sides of the mouth, increases the resonance, and thereby allow the muscles and nerves assisting the vocal cords closure to work maximally, promote passive and healthy closure of the vocal cords, and help to achieve healthy pronunciation and voice resonance.

Preferably, a gap 14 is provided between the first end portion 12 of the inner arc plate 1 and the second end portion 13 of the outer fender 2. The width of the gap 14 gradually increases from close to distant along a direction away from the accommodating chamber 4. The first end portion 12 extends along the direction of the tooth arrangement to provide support for the inner side of the lip, and the second end portion 13 extends outside of the lip so as to effectively maintain the corners of the mouth in a supported state by the second end portion 13. The gap 14 helps the second end portion 13 to extend from the inside to the outside. The grading of the gap 14 is provided to reduce the difficulty of disassembly and assembly, while ensuring that both the first end portion 12 and the second end portion 13 can provide effective support.

In this embodiment, the width of the first end portion 12 is slightly larger than the width of the plate body of the inner arc plate 1; the width of the second end portion 13 is greater than the width of the plate body of the outer arc plate 2.

Preferably, the first end portion 12 of the inner arc plate 1 comprises a first upper side surface, a first end surface and a first lower side surface, wherein a smooth transition is respectively provided between the first upper side surface, the first end surface and the first lower side surface. The second end portion 13 of the outer arc plate 2 includes a second upper side surface, a second end surface, and a second lower side surface, wherein a smooth transition is respectively provided between the second upper side surface, the second end surface, and the second lower side surface. The middle portion of the second upper side surface, the middle portion of the second end surface and the middle portion of the second lower surface are provided with a slit respectively. The first end portion 12 has a smooth transition from the first upper side surface to the first lower side surface through the first end surface to provide good support for the inner surface of the upper lip 19 and the inner surface of the lower lip 20, which improves comfort. The second end portion 13 has a smooth transition from the second upper side surface to the second lower side surface through the second end surface to provide good support for the upper lip 19 and the lower lip 20, which improves comfort. By providing a slit in the middle portion of the second upper side, the middle portion of the second end surface and the middle portion of the second lower side surface, a relatively relaxed space is provided for the lip to passively move the lip.

Further, preferably, the appliance is made of a rubber and plastic foamed material. Rubber and plastic foamed material (EVA) has good elasticity, flexibility and transparency, and can meet the requirements of non-toxic and medical-use, high temperature and low temperature resistance. It is suitable for making medical equipment.

In the present embodiment, the correction appliance for assisting vocal cord closure to train vocalization is formed integrally, thereby improving the structural strength so that it can be used multiple times for a long period of time. Moreover, the use of EVA material can provide a certain flexibility. Usually, the user can wear it in only 5 seconds without causing any side effects such as blocking the airway, blocking the esophagus and obstructing breathing.

In order to further understand the sound situation, the appliance is equipped with a sound sensor. The sound sensor is connected with an external computer. When the user puts the appliance into the mouth, the sound sensor collects the data and transmits it to the computer when the user sounds. The user's voice can be collected and analyzed in real time to improve treatment efficiency and accuracy.

The use of the correction appliance for assisting vocal cord closure to train vocalization is further described below. Figs. 5a-5b are schematic diagrams showing the state of use of the correction appliance for assisting vocal cord closure to train vocalization in Fig. 1.

As shown in Fig. 5a and Fig. 5b, the appliance is placed in the mouth. The upper row of incisors 15 and the lower row of incisors 16 bite into the upper accommodation cavity 5 and the lower accommodation cavity 6, respectively, and the upper accommodation cavity 5 and the lower accommodation cavity 6 respectively fixes the upper row of incisors 15 and the lower row of incisors 16. The tongue-abutting plate 7 abuts against the tongue 18, so that the tongue muscles are passively moved in a relatively relaxed state, and the tongue 18 is prevented from being upturned and the laryngeal muscles tension is released. The inner arc plate 1 is attached to the inner surface of the teeth, and the first ends 12 of the opposite sides of the inner arc plate 1 respectively extend to the canines 16 to assist the upper lip 19 and the lower lip 20 to separate from each other. When the baffle 8 is located between the inner surface of the upper lip 19 and the outer surface of the upper row of teeth, the upper labial frenulum is located in the upper groove 10, and when the lower baffle 9 is located between the inner surface of the lower lip 20 and the outer surface of the lower row of teeth, the lower labial frenulum is located in the lower groove 11. The outer arc plate 2 extends to the outside of the lips, and the second end portions 13 of the opposite sides of the outer arc plate 2 respectively extend to the molars 17, and is used for split the corners of the mouth and keep the corners of the mouth open.

It can be seen from the above description and practice that the correction appliance for assisting vocal cord closure to train vocalization has the following advantages compared with the prior art: the upper accommodation cavity and the lower accommodation cavity respectively fix the upper row of incisors and the lower incisors, such that the upper row of teeth and the lower row of teeth maintain a certain distance; the opposite ends of the inner arc plate and the opposite ends of the outer arc plate extend away from the accommodation cavity to assist the separation of the upper lip and the lower lip, so as to keep the lips and muscles relax; the distance between the opposite sides in the mouth is increased, which helps to increase resonance and promotes passive and healthy closure of the vocal cords, and thereby maximizes the stretch and the exercise of the muscles and nerves that help the vocal cords close to achieve healthy pronunciation, makes the sinus and frontal sinus fully resonate and produce a voice resonance; the outer arc plate extends from the inside of the lips to the outside of the lips, and is used to split the corners of the mouth and keep the corners of the mouth open, while avoiding the bad habit of opening mouth too much when speaking.

The invention is defined in the appended claims.

## Claims

1. An appliance for assisting vocal cord closure to train vocalization, wherein the appliance comprises an inner arc plate (1), an outer arc plate (2) and two oppositely disposed partition plates (3), the inner arc plate (1) being opposite to the outer arc plate (2); the two partition plates (3) are disposed spaced between the inner arc plate (1) and the outer arc plate (2), and an accommodation cavity (4) is enclosed by the two partition plates (3), the inner arc plate (1) and the outer arc plate (2); in a height direction, the accommodation cavity (4) is separated into an upper accommodation cavity (5) for receiving upper incisors and a lower accommodation cavity (6) for receiving lower incisors; both ends of opposite sides of the inner arc plates (1) extend respectively away from the accommodation cavity (4); and both ends of opposite sides of the outer arc plate (2) extend respectively away from the accommodation cavity (4), and are used to split the corners of the mouth.

2. The appliance for assisting vocal cord closure to train vocalization according to claim 1, wherein the appliance further comprise: a tongue-abutting plate (7), the tongue-abutting plate (7) is disposed on a side surface of the inner arc plate (1) facing away from the outer arc plate (2) and extends away from the outer arc plate (2).

3. The appliance for assisting vocal cord closure to train vocalization according to claim 2, wherein the width of the tongue-abutting plate (7) gradually increases from distant to close toward the inner arc plate (1).

4. The appliance for assisting vocal cord closure to train vocalization according to claim 2 or 3, wherein the tongue-abutting plate (7) includes a connecting end and a free end, the connecting end is disposed opposite the free end, the connecting end is disposed on the inner arc plate (1) that closes to the lower accommodation cavity (6), and the free end extends towards a side of the upper accommodation cavity (5).

5. The appliance for assisting vocal cord closure to train vocalization according to one of the preceding claims 1 to 3, wherein an upper baffle (8) is extended upwardly from an upper end surface of the outer arc plate (2), and a lower baffle (9) is extended downwardly from a lower end surface of the outer arc plate (2); the upper baffle (8) is used for blocking the inner surface of the upper lip from being in contact with the upper row of teeth, and the lower baffle (9) is used for blocking the inner surface of the lower lip from being in contact with the lower row of teeth.

6. The appliance for assisting vocal cord closure to train vocalization according to claim 5, wherein an upper groove (10) is provided in a middle portion of the upper baffle (8) for receiving a upper labial frenulum, and the upper baffle (8) is provided with a smooth transition from the opposite side groove walls of the upper groove (10) to the upper end faces of the two sides respectively; a lower groove (11) is provided in a middle portion of the lower baffle (9) for receiving a lower labial frenulum, and the lower baffle (9) is provided with a smooth transition from the opposite side groove walls of the lower groove (11) to the lower end faces of the both sides respectively.

7. The appliance for assisting vocal cord closure to train vocalization according to one of the preceding claims 1 to 3, wherein both end portions of the inner arc plate (1) are first end portions (12), and the first end portions (12) extend from the joint of the inner arc plate (1) and the partition plate (3) toward canines; both end portions of the outer arc plate (2) are second end portions (13), and the second end portions (13) extend from the joint of the outer arc plate (2) and the partition plate (3) toward molars.

8. The appliance for assisting vocal cord closure to train vocalization according to claim 7, wherein a gap (14) is provided between the first end (12) of the inner arc plate (1) and the second end (13) of the outer arc plate (2); the width of the gap (14) is gradually increasing from close to distant away from the accommodation cavity (4).

9. The appliance for assisting vocal cord closure to train vocalization according to claim 8, wherein the first end portion (12) of the inner arc plate (1) includes a first upper side surface, a first end surface, and a first lower side surface; a smooth transition is respectively provided between the first upper side surface, the first end surface, and the first lower side surface; the second end (13) of the outer arc plate (2) includes a second upper side, a second end surface, and a second lower side; a smooth transition is respectively provided between the second upper side surface, the second end surface, and the second lower side surface; a slit is respectively provided in a middle portion of the second upper side surface, a middle portion of the second end surface, and a middle portion of the second lower side surface.

10. The appliance for assisting vocal cord closure to train vocalization according to one of the preceding claims 1 to 3, wherein the appliance is made of a rubber and plastic foamed material.

## Patentansprüche

1. Vorrichtung zur Unterstützung des Stimmbandschlusses, um die Vokalisation zu trainieren, wobei die Vorrichtung eine innere Bogenplatte (1), eine äußere Bogenplatte (2) und zwei gegenüberliegend angeordnete Trennplatten (3) umfasst, wobei die innere Bogenplatte (1) der äußeren Bogenplatte (2) gegenüberliegt; wobei die beiden Trennplatten (3) beabstandet zwischen der inneren Bogenplatte (1) und der äußeren Bogenplatte (2) angeordnet sind und ein Aufnahmehohlraum (4) von den beiden Trennplatten (3), der inneren Bogenplatte (1) und der äußeren Bogenplatte (2) umschlossen ist; wobei der Aufnahmehohlraum (4) in einer Höhenrichtung in einen oberen Aufnahmehohlraum (5) zur Aufnahme der oberen Schneidezähne und einen unteren Aufnahmehohlraum (6) zur Aufnahme der unteren Schneidezähne unterteilt ist; wobei beide Enden der gegenüberliegenden Seiten der inneren Bogenplatten (1) sich jeweils von dem Aufnahmehohlraum (4) weg erstrecken; und beide Enden der gegenüberliegenden Seiten der äußeren Bogenplatte (2) sich jeweils von dem Aufnahmehohlraum (4) weg erstrecken und dazu verwendet werden, die Mundwinkel zu teilen.

2. Vorrichtung zur Unterstützung des Stimmbandschlusses zum Trainieren der Vokalisation nach Anspruch 1, wobei die Vorrichtung des Weiteren umfasst: eine Zungenanschlagplatte (7), wobei die Zungenanschlagplatte (7) auf einer Seitenfläche der inneren Bogenplatte (1) angeordnet ist, die von der äußeren Bogenplatte (2) abgewandt ist und sich von der äußeren Bogenplatte (2) weg erstreckt.

3. Vorrichtung zur Unterstützung des Stimmbandschlusses zum Trainieren der Vokalisation nach Anspruch 2, wobei die Breite der Zungenanschlagplatte (7) in Richtung der inneren Bogenplatte (1) von weit zu nahe allmählich zunimmt.

4. Vorrichtung zur Unterstützung des Stimmbandschlusses zum Trainieren der Vokalisation nach Anspruch 2 oder 3, wobei die Zungenanlegeplatte (7) ein Verbindungsende und ein freies Ende beinhaltet, wobei das Verbindungsende gegenüber dem freien Ende angeordnet ist, das Verbindungsende an der inneren Bogenplatte (1) angeordnet ist, die den unteren Aufnahmehohlraum (6) abschließt, und das freie Ende sich zu einer Seite des oberen Aufnahmehohlraums (5) erstreckt.

5. Vorrichtung zur Unterstützung des Stimmbandschlusses zum Trainieren der Vokalisation nach einem der vorangegangenen Ansprüche 1 bis 3, wobei eine obere Sperrplatte (8) sich von einer oberen Endfläche der äußeren Bogenplatte (2) nach oben erstreckt und eine untere Sperrplatte (9) sich von einer unteren Endfläche der äußeren Bogenplatte (2) nach unten erstreckt; wobei die obere Sperrplatte (8) dazu dient, die Innenfläche der oberen Lippe daran zu hindern, mit der oberen Zahnreihe in Berührung zu kommen, und die untere Sperrplatte (9) dazu dient, die Innenfläche der unteren Lippe daran zu hindern, mit der unteren Zahnreihe in Berührung zu kommen.

6. Vorrichtung zur Unterstützung des Stimmbandschlusses zum Trainieren der Vokalisation nach Anspruch 5, wobei ein oberer Einschnitt (10) in einem mittleren Teil der oberen Sperrplatte (8) zur Aufnahme eines oberen Lippenbändchens vorgesehen ist, und die obere Sperrplatte (8) mit einem glatten Übergang von den einander gegenüberliegenden Einschnittwänden des oberen Einschnitts (10) zu den oberen Endflächen der beiden Seiten versehen ist; wobei ein unterer Einschnitt (11) in einem mittleren Teil der unteren Sperrplatte (9) zur Aufnahme eines unteren Lippenbändchens vorgesehen ist und die untere Sperrplatte (9) mit einem glatten Übergang von den einander gegenüberliegenden Einschnittwänden des unteren Einschnitts (11) zu den jeweiligen unteren Endflächen der beiden Seiten versehen ist.

7. Vorrichtung zur Unterstützung des Stimmbandschlusses zum Trainieren der Vokalisation nach einem der vorangegangenen Ansprüche 1 bis 3, wobei beide Endteile der inneren Bogenplatte (1) erste Endteile (12) sind und sich die ersten Endteile (12) von der Verbindung der inneren Bogenplatte (1) und der Trennplatte (3) in Richtung der Eckzähne erstrecken; wobei beide Endteile der äußeren Bogenplatte (2) zweite Endteile (13) sind und sich die zweiten Endteile (13) von der Verbindung der äußeren Bogenplatte (2) und der Trennplatte (3) in Richtung der Backenzähne erstrecken.

8. Vorrichtung zur Unterstützung des Stimmbandschlusses zum Trainieren der Vokalisation nach Anspruch 7, wobei zwischen dem ersten Ende (12) der inneren Bogenplatte (1) und dem zweiten Ende (13) der äußeren Bogenplatte (2) ein Spalt (14) vorgesehen ist; wobei die Breite des Spaltes (14) von nahe zu fern, von dem Aufnahmehohlraum (4) ausgehend, allmählich zunimmt.

9. Vorrichtung zur Unterstützung des Stimmbandschlusses zum Trainieren der Vokalisation nach Anspruch 8, wobei der erste Endabschnitt (12) der inneren Bogenplatte (1) eine erste Oberseitenfläche, eine erste Endfläche und eine erste Unterseitenfläche aufweist; wobei jeweils ein glatter Übergang zwischen der ersten Oberseitenfläche, der ersten Endfläche und der ersten Unterseitenfläche vorgesehen ist; wobei das zweite Ende (13) der äußeren Bogenplatte (2) eine zweite Oberseite, eine zweite Endfläche und eine zweite Unterseite aufweist; wobei jeweils ein glatter Übergang zwischen der zweiten Oberseitenfläche, der zweiten Endfläche und der zweiten Unterseitenfläche vorgesehen ist; wobei jeweils ein Schlitz in einem mittleren Abschnitt der zweiten Oberseitenfläche, einem mittleren Abschnitt der zweiten Endfläche und einem mittleren Abschnitt der zweiten Unterseitenfläche vorgesehen ist.

10. Vorrichtung zur Unterstützung des Stimmbandschlusses zum Trainieren der Vokalisation nach einem der vorangegangenen Ansprüche 1 bis 3, wobei die Vorrichtung aus einem geschäumten Material aus Gummi und Kunststoff hergestellt ist.

## Revendications

1. Appareil pour assister la fermeture des cordes vocales afin d'entraîner la vocalisation, dans lequel l'appareil comprend une plaque en arc intérieure (1), une plaque en arc extérieure (2) et deux plaques de séparation (3) disposées opposées l'une à l'autre, la plaque en arc intérieure (1) étant opposée à la plaque en arc extérieure (2) ; les deux plaques de séparation (3) sont disposées espacées entre la plaque en arc intérieure (1) et la plaque en arc extérieure (2), et une cavité de logement (4) est entourée par les deux plaques de séparation (3), la plaque en arc intérieure (1) et la plaque en arc extérieure (2) ; dans une direction de hauteur, la cavité de logement (4) est séparée en une cavité de logement supérieure (5) destinée à recevoir les incisives supérieures et une cavité de logement inférieure (6) destinée à recevoir les incisives inférieures ; les deux extrémités de côtés opposés des plaques en arc intérieures (1) s'étendent respectivement en s'éloignant de la cavité de logement (4) ; et les deux extrémités de côtés opposés de la plaque en arc extérieure (2) s'étendent respectivement en s'éloignant de la cavité de logement (4), et sont utilisées pour écarter les coins de la bouche.

2. Appareil pour assister la fermeture des cordes vocales afin d'entraîner la vocalisation selon la revendication 1, dans lequel l'appareil comprend en outre : une plaque d'aboutement (7) de la langue, la plaque d'aboutement (7) de la langue est disposée sur une surface latérale de la plaque en arc intérieure (1) tournée à l'opposé de la plaque en arc extérieure (2) et s'étend à l'opposé de la plaque en arc extérieure (2).

3. Appareil pour assister la fermeture des cordes vocales afin d'entraîner la vocalisation selon la revendication 2, dans lequel la largeur de la plaque d'aboutement (7) de la langue augmente progressivement de distante à proche vers la plaque en arc intérieure (1).

4. Appareil pour assister la fermeture des cordes vocales afin d'entraîner la vocalisation selon la revendication 2 ou 3, dans lequel la plaque d'aboutement (7) de la langue comprend une extrémité de raccordement et une extrémité libre, l'extrémité de raccordement est disposée à l'opposé de l'extrémité libre, l'extrémité de raccordement est disposée sur la plaque en arc intérieure (1) qui se ferme sur la cavité de logement inférieure (6), et l'extrémité libre s'étend vers un côté de la cavité de logement supérieure (5).

5. Appareil pour assister la fermeture des cordes vocales afin d'entraîner la vocalisation selon l'une quelconque des revendications 1 à 3 précédentes, dans lequel une chicane supérieure (8) s'étend vers le haut à partir d'une surface d'extrémité supérieure de la plaque en arc extérieure (2), et une chicane inférieure (9) s'étend vers le bas à partir d'une surface d'extrémité inférieure de la plaque en arc extérieure (2) ; la chicane supérieure (8) est utilisée pour empêcher la surface intérieure de la lèvre supérieure d'entrer en contact avec la rangée de dents supérieure, et la chicane inférieure (9) est utilisée pour empêcher la surface intérieure de la lèvre inférieure d'entrer en contact avec la rangée de dents inférieure.

6. Appareil pour assister la fermeture des cordes vocales afin d'entraîner la vocalisation selon la revendication 5, dans lequel une rainure supérieure (10) est prévue dans une partie centrale de la chicane supérieure (8) pour recevoir un frenulum labial supérieur, et la chicane supérieure (8) est pourvue d'une transition sans heurt depuis les parois de rainure latérales opposées de la rainure supérieure (10) jusqu'aux faces d'extrémité supérieures des deux côtés, respectivement ; une rainure inférieure (11) est prévue dans une partie centrale de la chicane inférieure (9) pour recevoir un frenulum labial inférieur, et la chicane inférieure (9) est pourvue d'une transition sans heurt depuis les parois de rainure latérales opposées de la rainure inférieure (11) jusqu'aux faces d'extrémité inférieures des deux côtés, respectivement.

7. Appareil pour assister la fermeture des cordes vocales afin d'entraîner la vocalisation selon l'une quelconque des revendications 1 à 3 précédentes, dans lequel les deux parties d'extrémité de la plaque en arc intérieure (1) sont des premières parties d'extrémité (12), et les premières parties d'extrémité (12) s'étendent depuis la jonction de la plaque en arc intérieure (1) et de la plaque de séparation (3) vers les canines ; les deux parties d'extrémité de la plaque en arc extérieure (2) sont des deuxièmes parties d'extrémité (13), et les deuxièmes parties d'extrémité (13) s'étendent depuis la jonction de la plaque en arc extérieure (2) et de la plaque de séparation (3) vers les molaires.

8. Appareil pour assister la fermeture des cordes vocales afin d'entraîner la vocalisation selon la revendication 7, dans lequel un espace (14) est prévu entre la première extrémité (12) de la plaque en arc intérieure (1) et la deuxième extrémité (13) de la plaque en arc extérieure (2); la largeur de l'espace (14) augmente progressivement de proche à distant depuis la cavité de logement (4).

9. Appareil pour assister la fermeture des cordes vocales afin d'entraîner la vocalisation selon la revendication 8, dans lequel la première partie d'extrémité (12) de la plaque en arc intérieure (1) comprend une première surface latérale supérieure, une première surface d'extrémité et une première surface latérale inférieure ; une transition sans heurt est respectivement prévue entre la première surface latérale supérieure, la première surface d'extrémité et la première surface latérale inférieure ; la deuxième extrémité (13) de la plaque en arc extérieure (2) comprend un deuxième côté supérieur, une deuxième surface d'extrémité et un deuxième côté inférieur ; une transition sans heurt est respectivement prévue entre la deuxième surface latérale supérieure, la deuxième surface d'extrémité et la deuxième surface latérale inférieure ; une fente est respectivement prévue dans une partie centrale de la deuxième surface latérale supérieure, une partie centrale de la deuxième surface d'extrémité et une partie centrale de la deuxième surface latérale inférieure.

10. Appareil pour assister la fermeture des cordes vocales afin d'entraîner la vocalisation selon l'une quelconque des revendications 1 à 3 précédentes, dans lequel l'appareil est constitué d'une matière moussée en caoutchouc et matière plastique.
